# EUROPEAN PATENT APPLICATION

(11) **EP 3 895 527 A1**
(43) Date of publication of application: **20.10.2021**
(21) Application number: 20845367.0
(22) Date of filing: 19.05.2020
(51) Int. Cl.: A01K 13/00

(54) **COW BODY MASSAGE METHOD AND COW BODY MASSAGE DEVICE**

(30) Priority: 04.03.2020 CN 202010149369; 04.03.2020 CN 202020257098 U; 04.03.2020 CN 202010144123; 04.03.2020 CN 202020257328 U
(71) Applicant: FJ Dynamics Technology Co., Ltd, Xiangyang, Hubei 441100 (CN)
(72) Inventor: CHEN, Shuangxi, Xiangyang, Hubei 441100 (CN); YANG, Lulu, Xiangyang, Hubei 441100 (CN); CHEN, Liang, Xiangyang, Hubei 441100 (CN); MU, Di, Xiangyang, Hubei 441100 (CN); YAO, Yuan, Xiangyang, Hubei 441100 (CN); WANG, Yongwei, Xiangyang, Hubei 441100 (CN)
(74) Representative: Miao, Tianhao
(86) International application number: PCT/CN2020/090931
(87) International publication number: WO 2021/174678

(57) **Abstract**

Provided is a cattle body massage method and device. The cattle body massage device comprises a brush roller, a driving unit and a supporting unit. The driving unit comprises a motor holder and a driving motor provided at the motor holder. The brush roller is drivably mounted on an output shaft of the driving motor. The supporting unit comprises a mounting support and a swinging support mounted at a connecting end of the swinging support, wherein the motor holder is mounted on the swinging support, so as to allow the brush roller to be suspendedly held at a lower side of the mounting support, wherein the driving unit is allowed to synchronously tilt by the driving motor from the brush roller when the brush roller is driven to tilt.

## Description

### BACKGROUND OF THE PRESENT INVENTION

### FIELD OF INVENTION

This invention relates to the field of dairy farming, and, in particular to a cattle body massage method and device.

### DESCRIPTION OF RELATED ARTS

With the continuous development of social economy and the continuous improvement of people's health awareness, in recent years, the demand for milk increases rapidly, which stimulates the rapid development of animal husbandry (especially dairy cattle breeding). For a large dairy farming base, it is configured with multiple cowsheds for dairy breeding. Although this breeding model can increase the milk production by increasing the number of dairy cows, it also leads to the eating, drinking, pulling and sprinkling of the cows all being carried out in the cowsheds, so that it can cause dirt to accumulate on the cow's body and parasitic parasites, and even cause certain diseases (especially infectious diseases). The dirt accumulated on the cow's body is also easy to make the cow feel uncomfortable and affect the milk production of the cow. For cows themselves, in order to feel more comfortable in the cowshed, they often unconsciously use their body to rub the surface of the cowshed in order to expect to relieve the itching and remove dirt in this way, but this method is easy to cause many questions. Firstly, the cow's body rubbing against the cowshed may cause damage to the skin of the cow, especially the use of brick-built cowshed to rubbing the body can cause skin damage to the cow, so as to facilitate the invasion of bacteria and viruses; secondly, the way that cows rub the cowshed with their body cannot target more parts of the cow, especially the neck of the cow; thirdly, the way that the cows rub the cowshed with the body is easy to damage the cowshed, which may even cause the cowshed to collapse after a long period of friction.

### SUMMARY OF THE PRESENT INVENTION

An advantage of the present invention is to provide a cattle body massage method and device, wherein more body parts of the cattle body can be massaged in a manner that allows the cattle to feel comfortable according to the cattle body massage method, especially when the cattle is massaged, the cattle can feel happy, so as to improve the production and quality of the milk of the cattle.

An advantage of the present invention is to provide a cattle body massage method and device, wherein the cattle can be massaged in a manner of brushing the body of the cattle according to the cattle body method, so that the skin of the cattle can be prevented from being damaged in the massage process, and the health of the cattle can be kept.

An advantage of the present invention is to provide a cattle body massage method and device, wherein the cattle body can be automatically massaged according to the cattle body massage method, especially when the cattle moves to the location of the cattle body massage device and makes the surface of the cattle body touch a brush roller and when the brush roller is titled to a preset angle, the brush roller can be driven to rotate so as to massage the cattle body automatically

An advantage of the present invention is to provide a cattle body massage method and device, wherein the cattle body massage method can provide different massage modes by controlling the rotational speed and direction of the brush roller so as to meet the needs of different cattle. For example, the age of the cattle can be automatically identified according to the cattle body massage method, and the brush roller can be controlled at the proper speed and/or in the suitable direction to massage the cattle body depending on the cattle body's age, so as to meet the individual needs of the cattle.

An advantage of the present invention is to provide a cattle body massage method and device, wherein different types of massage can be provided by controlling the rotational direction of the brush roller according to the cattle body massage method, for example, the brush roller can be controlled to rotate forward, backward and rotate alternately, so as to provide different massage modes.

An advantage of the present invention is to provide a cattle body massage method and device, wherein the cattle massage device provide a supporting unit and a driving unit provided on the supporting unit, wherein the brush roller is drivably arranged at a driving motor which is arranged at the driving unit, wherein when brush roller is driven to tilt by the cattle body, the driving motor can be driven to tilt by the brush roller to make the driving motor be powered to drive the brush roller, so that the brush roller provides massage for the cattle body in a manner of brushing the cattle body for the cattle.

An advantage of the present invention is to provide a cattle body massage method and device, wherein the driving unit is rotatably arranged at the supporting unit, so that when the brush roller is driven to tilt by the cattle body, the brush roller can drive the driving unit to tilt.

An advantage of the present invention is to provide a cattle body massage method and device, wherein the supporting unit provides a mounting support and a swinging support that is rotatably mounted on the mounting support, wherein the driving unit is mounted on the swinging support, so that when the brush roller is driven to tilt by the cattle body, the brush roller can drive the driving unit to tilt.

An advantage of the present invention is to provide a cattle body massage method and device, wherein when the brush roller is driven to tilt by the cattle body, and after the brush roller drives the driving unit to tilt, the driving unit can drive the brush roller automatically, so as to massage the cattle body in a manner of brushing the cattle body, wherein when the cattle body is away from the brush roller, under the gravity, the brush roller drives the driving motor to have a tendency to restore the initial state, and when the inclination angle of the driving motor is less than a preset angle or less than a preset angle for a period of time, the driving motor stops rotation so as to stop the rotation of the brush roller, so that the cattle body massage device can automatically provide massage for the cattle body.

An advantage of the present invention is to provide a cattle body massage method and device, wherein the brush roller is detachable mounted to the driving unit to allow the brush roller to be replaced as needed.

According to one aspect of the invention, the invention provides a cattle body massage device, wherein the cattle body massage device comprises:
a brush roller;
a driving unit, wherein the driving unit comprises a motor holder and a driving motor provided at the motor holder, wherein the brush roller is drivably mounted on the output shaft of the driving motor; and
a supporting unit, wherein the supporting unit comprises a mounting support and a swinging support mounted at a connecting end of the swinging support, wherein the motor holder is mounted on the swinging support, so as to allow the brush roller to be suspendedly held at a lower side of the mounting support, wherein the driving unit is allowed to synchronously tilt driven by the brush roller when the brush roller is driven to tilt.

According to an embodiment of the invention, the swinging support is rotatably mounted on the mounting support, so that the driving unit is allowed to synchronously tilt by the drive from the brush roller when the brush roller is driven to tilt.

According to an embodiment of the invention, the motor holder is rotatably mounted on the swinging support, so that the driving unit is allowed to synchronously tilt by the drive from the brush roller when the brush roller is driven to tilt.

According to an embodiment of the invention, the rotation direction of the swinging support relative to the mounting support is different from the rotation direction of the motor holder relative to the swinging support.

According to an embodiment of this invention, a rotation axis formed at the connecting portion of the swinging support and the mounting support is orthogonal to another rotation axis formed at the connecting portion of the motor holder and the swinging support.

According to an embodiment of this invention, the mounting support has at least a pivot supporting arm and the swinging support comprises a supporting body and an upper holding arm extending upward from the supporting body, wherein the upper holding arm is rotatable mounted on the pivot supporting arm of the mounting support.

According to an embodiment of this invention, the mounting support has two pivot arms which are symmetrically arranged, wherein the motor holder has at least two holder arms which are mutually symmetrical, wherein the swinging support comprises a supporting body, two upper holding arms and two lower holding arms ,wherein the two upper holder arms extend upwardly from a pair of opposite sides of the supporting body in a mutually symmetrical manner and are respectively rotatably mounted on the two pivot arms, wherein the two lower holder arms extend downwardly from another pair of opposite sides of the supporting body in a mutually symmetrical manner and are respectively rotatably mounted on the two holder arms.

According to an embodiment of this invention, the two upper holding arms of the swinging support are respectively rotatably mounted on the two pivot arms of the mounting support through a bearing and the two holder arms of the motor holder are rotatably mounted on the two lower holding arms of the motor holder through another bearing.

According to an embodiment of this invention, the motor holder has an extending channel, wherein the driving motor is provided at the motor holder in a manner hidden between the motor holder and the swinging support, and an output shaft of the driving motor is extended through the extending channel to an exterior of the motor holder, wherein the brush roller is drivably mounted on the output shaft of the driving motor.

According to an embodiment of this invention, the brush roller is detachably mounted on the output shaft of the driving motor.

According to an embodiment of this invention, the driving unit comprises a controller and a monitor communicably coupled with the controller, wherein the driving motor is controllably coupled to the controller, wherein the monitor is used for monitoring the inclination state of the driving motor so as to allow the controller to control the working state of the driving motor according to the monitor result from the monitor.

According to an embodiment of this invention, the two pivot arms are adjustably mounted on the upper holding arm.

According to an embodiment of this invention, the supporting unit further comprises an adjustable supporting frame, wherein a fixing end of the mounting support is adjustably mounted at the adjustable supporting frame so that the height of the mounting support can be adjusted by the adjustable supporting frame.

According to an embodiment of this invention, the adjusting support comprises a fixing frame, a driving screw and a sliding seat, wherein the fixing frame has a sliding track in a vertical direction, wherein the driving screw is rotatably mounted on the fixing frame, wherein the sliding seat is drivably mounted on the driving screw and slidably held on the sliding track of the fixing frame, wherein the mounting support comprises a mounting plate, a hanging arm and an extending arm, wherein the mounting plate is provided at a first end of the hanging arm and mounted on the sliding seat, wherein the extending arm is provide at a second end of the hanging arm, wherein the swinging support is mounted on the extending arm.

In accordance with another aspect of the invention, the present invention further provides a cattle body massage method, comprising the following steps.
(a) mount a swinging support on a lower side of a connecting end of a mounting support;
(b) mount a motor holder of a driving unit on the swinging support;
(c) drivably mount a brush roller on a driving motor of the driving unit, wherein the driving motor is mounted on the motor holder; and
(d) monitor whether an inclination angle of the driving motor reaches a preset angle, wherein after the inclination angle reaches the preset angle, the brush roller is driven to rotate by the driving motor, so as to allow the brush roller to massage the cattle body in a manner of brushing the cattle body.

According to an embodiment of the present invention, wherein in the step (a) the rotation of the swinging support relative to the mounting support is allowed.

According to an embodiment of the present invention wherein in the step (b) the rotation of the motor holder relative to the swinging support is allowed.

According to an embodiment of the present invention, wherein in the method the rotation direction of the swinging support relative to the mounting support is different from the rotation direction of the motor holder relative to the swinging support.

According to an embodiment of the present invention, wherein in the step (d) the driving motor is controlled to drive the brush roller to scrub the cattle body in a forward rotation and reverse rotation alternately.

According to an embodiment of the present invention, wherein in the step (d) the driving motor is monitored by a gyroscope.

According to an embodiment of the present invention, wherein in the steps (d) the driving motor is controlled based on the age of the cattle body through identifying the age of the cattle body. Still further objects and advantages will become apparent from a consideration of the ensuing description and drawings. These and other objectives, features, and advantages of the present invention will become apparent from the following detailed description, the accompanying drawings, and the appended claims.

### BRIEF DESCRIPTION OF THE DRAWINGS

FIG.1 is a 3D perspective view illustrating the cattle body massage device according to a preferred embodiment of the present invention.
FIG.2 is an exploded view illustrating the cattle body massage device according to the above preferred embodiment of the present invention.
FIG.3A illustrates a working state of the cattle body massage device according to the above preferred embodiment of the present invention.
FIG.3B illustrates another working state of the cattle body massage device according to the above preferred embodiment of the present invention.
FIG.4 illustrates a use state of the cattle body massage device according to the above preferred embodiment of the present invention.
FIG.5 illustrates another use state of the cattle body massage device according to the above preferred embodiment of the present invention.
FIG.6 illustrates another use state of the cattle body massage device according to the above preferred embodiment of the present invention.
FIG.7 illustrates another use state of the cattle body massage device according to the above preferred embodiment of the present invention.
FIG.8 illustrates another use state of the cattle body massage device according to the above preferred embodiment of the present invention.
FIG.9 is 3D perspective view illustrating an alternative implement of the cattle body massage device according to the above preferred embodiment of the present invention.
FIG. 10 is an exploded view illustrating the cattle body massage device according to the above preferred embodiment of the present invention.

### DETAILED DESCRIPTION OF THE PREFERRED EMBODIMENT

The following description is disclosed to enable any person skilled in the art to make and use the present invention. Preferred embodiments are provided in the following description only as examples and modifications will be apparent to those skilled in the art. The general principles defined in the following description would be applied to other embodiments, alternatives, modifications, equivalents, and applications without departing from the spirit and scope of the present invention.

Those skilled in the art should understand that in the disclosure of the present invention, terms such as "longitudinal," "lateral," "upper," "lower," "front," "back," "left," "right," "perpendicular," "horizontal," "top," "bottom," "inner," "outer," etc., which indicate directions or positional relations are based on the directions or positional relations demonstrated in the figures and only to better describe the present invention and simplify the description, rather than to indicate or imply that the indicated device or element must be applied to a specific direction or be operated or constructed in a specific direction. Therefore, these terms shall not be considered limits of the present invention.

It can be understood that the term "a" should be understood as "at least one" or "one or more". That is, in one embodiment, the number of an element may be one, while in other embodiments, the number of the element may be multiple, and the term "a" is not to be construed as a limitation of the number.

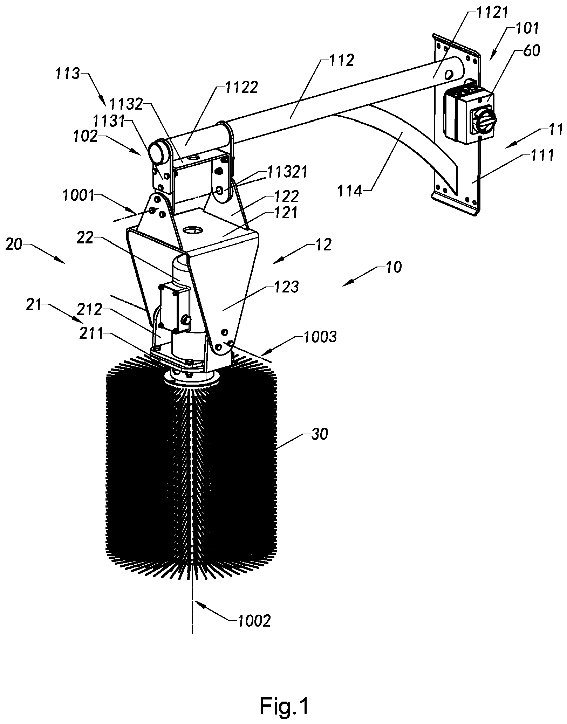

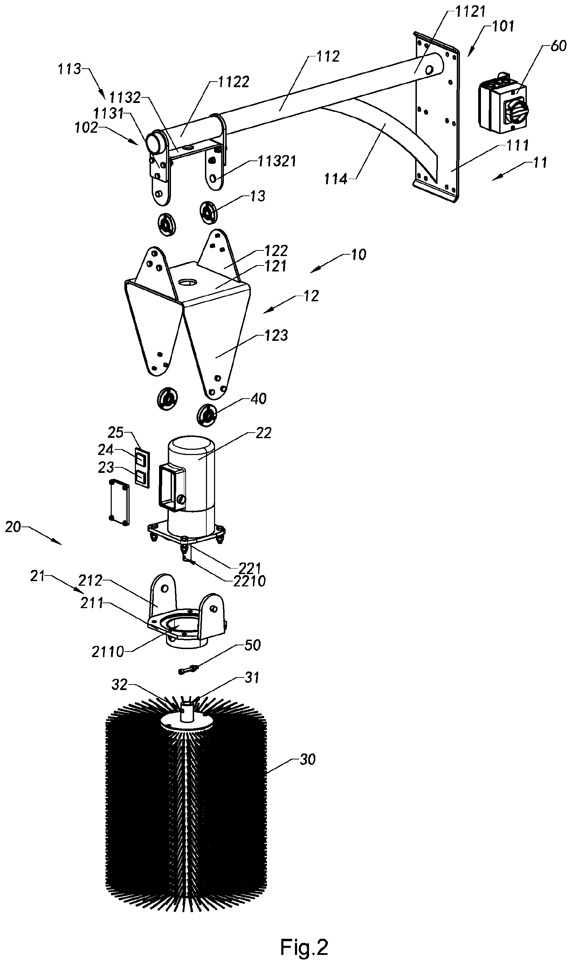

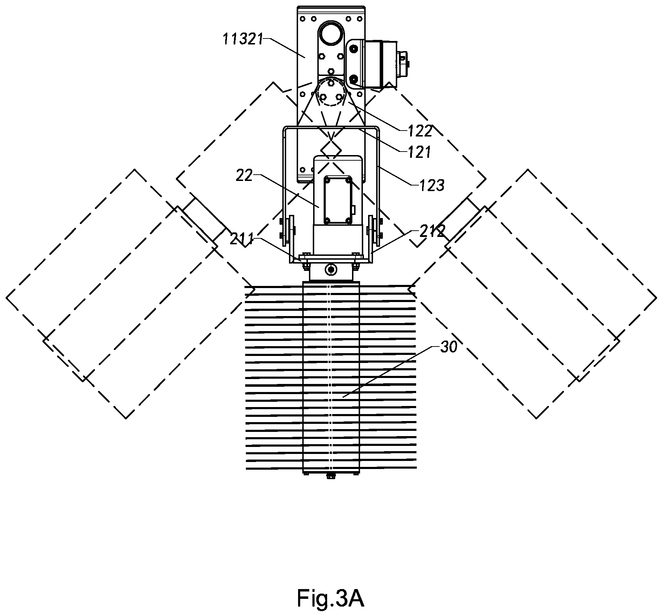

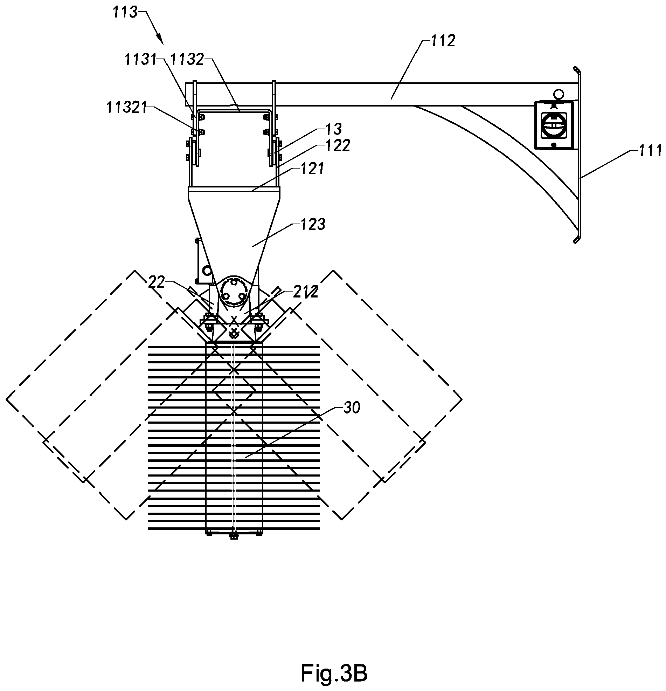

Referring to Figs.1 to 3B, a cattle body massage device is illustrated according to a preferred embodiment of the present invention. The cattle body massage device comprises a supporting unit 10, a driving unit 20 and a brush roller 30, wherein the driving unit is mounted on the supporting unit 10, wherein the brush roller 30 is drivably mounted on the driving unit 20, wherein the supporting unit 10 is configured to be able to be mounted on an attachment such as a wall or a supporting column of a cowshed to keep the brush roller 30 in a use environment (cowshed). When the cattle body touches the brush roller 30 and drive the brush roller 30 to incline to a preset angle, the driving unit 20 can drive the brush roller 30 to rotate so that the brush roller 30 can provide massage for the cattle body in a manner of brushing the cattle body. Correspondingly, when the cattle body is away from the brush roller 30, under the gravity, the brush roller 30 has a tendency to restore the initial state (vertical state) and eventually can restore to the initial state, and when the inclination angle of the brush roller 30 is less than a preset angle or less than a preset angle for a period of time, the brush roller 30 stops rotation.

Specifically, referring to the Figs.1-3B, the supporting unit 10 comprises a mounting support 11 and a swinging support 12, wherein the mounting support 11 has a fixing end 101 and a connecting end 102 corresponding to the fixing end 101, wherein the swinging support 12 is mounted at the connecting end 102 of the mounting support 11. The fixing end 101 of the mounting support 11 is configured to be able to be mounted on an attachment such as a wall or a supporting column of a cowshed and the mounting support 11 keeps the swinging support 12 away from the attachment such as the wall or the supporting column, so that the cattle body massage device can be mounted in the use environment (cowshed).

More specifically, the mounting support 11 comprises a mounting plate 111, a hanging arm 112 and an extending arm 113, wherein the hanging arm 112 has a first end portion 1121 and a second end portion 1122 corresponding to the first end portion 1121, wherein the mounting plate 111 is disposed at the first end portion 1121 of the hanging arm 112, and the fixing end 101 of the mounting support 11 is formed by the mounting plate 111, wherein the extending arm 113 is disposed at the second end portion 1122 of the hanging arm 112, and the connecting end 102 of the mounting support 11 is formed by the extending arm 113.

It is worth mentioning that the shape of the mounting plate 111 of the mounting support 11 is not limited in the cattle body massage device in the present invention. For example, the mounting plate 111 can be a flat-shaped structure, so as to allow the fixing end 101 of the mounting support 11 can be reliably fixed to the wall of the cowshed, or the mounting plate 111 can a circular-shaped structure, so as to allow the fixing end 101 of the mounting support 11 can be reliably fixed at the support column of the cowshed.

It is also worth mentioning that the manner in which the mounting plate 111 is provided at the first end portion 1121 of the hanging arm 112 is not limited in the cattle body massage device of the present invention. For example, the mounting plate 111 can be welded at the first end portion 1121 of the hanging arm 112, or the mounting plate 111 can be integrally formed with the hanging arm 112. Correspondingly, the manner in which the extending arm 113 is provided at the second end portion 1122 of the hanging arm 112 is not limited in the cattle body massage device of the present invention. For example, the extending arm 113 can be welded at the second end portion 1122 of the hanging arm 112, or the extending arm 113 can be integrally formed with the hanging arm 112, or the extending arm 113 can be sleeved on the second end portion 1122 of the hanging arm 112.

Continuing to refer Fig. 1 to 3B, the mounting support 11 further comprises a inclined supporting element 114, wherein the inclined supporting element 114 is inclinedly arranged between the mounting plate 111 and a middle portion of the hanging arm 112, so as to form a stable triangular structure between the inclined supporting element 114, the mounting plate 111 and the hanging arm 112, which can ensure the reliability of the cattle body massage device. Specifically, the first end portion 1121 is arranged on an upper side of the mounting plate 111 so that the hanging arm 112 extends from the upper side of the mounting plate 111 to a direction away from the mounting plate 111. An end of the inclined supporting element 114 is arranged on a lower side of the mounting plate 111 and the other end of the inclined supporting element 114 is extended to the middle portion of the hanging arm 112, so as to form a stable triangular structure between the inclined supporting element 114, the mounting plate 111 and the hanging arm 112.

Continuing to refer to Fig. 1 to 3B, the swinging support 12 comprises a supporting body 121, at least one upper holding arm 122 and at least one lower holding arm 123, wherein the upper holding arm 122 is extended upwardly from the supporting body 121 to be mounted on the extending arm 113 of the mounting support 11. Correspondingly, the lower holding arm 123 is extended downwardly from the supporting body 121 to be mounted on the driving unit 20, so that the swinging support 12 can be held on the lower side of the connecting end 102 of the mounting support 11.

Preferably, in the specific embodiment of the cattle body massage device shown in Figs 1 to 3B, the upper holding arm 122 of the swinging support 12 is rotatably mounted on the extending arm 113 of the mounting support 11, so as to form a first rotation axis 1001 at a connecting portion of the extending arm 113 of the mounting support 11 and the upper holding arm 122 of the swinging support 12, so that the swinging support 12 can be driven to rotate around the first rotation axis 1001 relative to the extending arm 113 of the mounting support 11 to adjust the angle of the brush roller 30 in the use environment (cowshed).

Specifically, the extending arm 113 comprises two connecting support arms 1131 and a U-shaped pivot frame 1132, wherein the two connecting support arms 1132 are arranged to extend downwardly from the second end portion 1122 of the hanging arm 112 in a mutually spaced and symmetrical manner, wherein two sides of the U-shaped pivot frame 1132 is respectively mounted on the two connecting support arms 1132 and two pivot arms 11321 are respectively formed at the two sides of the U-shaped pivot frame 1132. Correspondingly, the swinging support 12 comprise the two upper holding arms 122, wherein the two upper holding arms 122 is arranged to extend downwardly from a pair of opposite sides of the supporting body 121 in a mutually spaced and symmetrical manner, and each of the upper holding arms 122 is respectively rotatably mounted on each of the pivot support arms 11321 of the mounting support 11, so as to form the first rotation axis 1001 at the connecting portion of the extending arm 113 of the mounting support 11 and the upper holding arm 122 of the swinging support 12. Optionally, the U-shaped pivot frame 1132 is adjustable arranged at each of the connecting support arms 1131 to adjust the height of the brush roller 30 by adjusting the relative position of the U-shaped pivot frame 1132 and the connecting support arms 1131, so that the U-shaped pivot frame 1132 is adjustable mounted on each of the connecting support arms 1131, so that the cattle body massage device is adapted for the massage needs from the cattle body with different sizes.

It is worth mentioning that the manner in which each of the upper holding arms 122 of the swinging support 12 is rotatably mounted on each of the pivot support arms 11321 of the mounting support 11 is not limited in the cattle body massage device of the present invention. For example, in the embodiment of the cattle body massage device as shown in Fig.1 to 3B, the supporting unit 10 further comprises two first shafts 13, wherein each of the upper holding arms 122 of the swinging support 12 is respectively mounted on each of the pivot arms 11321 of the extending arm 113 of the mounting support 11 through each of the two first shafts 13, so that the two upper holding arms 122 are respectively rotatably mounted on the two pivot arms 11321 of the extending arm 113 of the mounting support 11, so that the swinging support 12 is rotatably mounted on the mounting support 11. Optionally, in other embodiments of the cattle body massage device, each of the upper holding arms 122 of the swinging support 12 can be directly rotatably mounted on the two pivot arms 11321 of the of the mounting support 11, so that the swinging support 12 is rotatably mounted on the mounting support 11.

Continuing to refer to Fig. 1 to 3B, the driving unit 20 comprises a motor holder 21 and a driving motor 22 provided at the driving motor 22, wherein the motor holder 21 is mounted on the lower holding arm 123 of the swinging support 12, wherein the 30 is drivably mounted on a output shaft 221 of the driving motor 22. The central axis of the brush roller 30 forms a second rotation axis 1002, wherein the driving motor 22 can drive the brush roller 30 to rotate around the second rotation axis 1002, so as to allow the brush roller 30 to scrub the body of the cattle body.

Preferably, in the detail embodiment as shown in Fig. 1 to 3B, the motor holder 21 is rotatably mounted on the lower holding arm 123 of the swinging support 12 to form a third rotation axis 1003 between a connecting portion between the motor holder 21 and the swinging support 12, so that the motor holder 21 is able to be driven to rotate around the third rotation axis 1003 and relative to the lower holding arm 123 of the swinging support 12, so as to adjust the brush roller 30 in the use environment (cowshed).

Specifically, the swinging support 12 comprises the two lower holding arm 123, wherein the two lower holding arm 123 is arranged to extend from a pair of opposite sides of the supporting body 121 in a mutually spaced and symmetrical manner. Correspondingly, the motor holder 21 comprises a holder body 211 and two holder arms 212, wherein the two holder arms 212 are arranged to extend from a pair of opposite sides of the holder body 211, and the two holder arms 212 of the motor holder 21 are respectively rotatably mounted on the two lower holding arm 123 of the swinging support 12, so that the third rotation axis 1003 is formed at a connecting portion of the holder arms 212 of the motor holder 21 and the lower holding arm 123 of the swinging support 12.

Preferably, the rotation direction of the upper holding arms 122 of the swinging support 12 relative to the connecting support arm 113 of the mounting support 11 is different from the rotation direction of the holder arms 212 of the motor holder 21 relative to the lower holding arm 123 of the swinging support 12, so that the angle of the brush roller 30 can be more flexible in the use environment (cowshed). More preferably, the rotation direction of the upper holding arms 122 of the swinging support 12 relative to the connecting support arm 113 of the mounting support 11 and the rotation direction of the holder arms 212 of the motor holder 21 relative to the lower holding arm 123 of the swinging support 12 are perpendicular, that is, the 1001 formed at the connecting portion of the upper holding arms 122 of the swinging support 12 and the connecting support arm 113 of the mounting support 11 is orthogonal to the third rotation axis 1003 formed at the connecting portion of the holder arms 212 of the motor holder 21 and the lower holding arm 123 of the swinging support 12.

Specifically, the two upper holding arms 122 of the swinging support 12 extended upwardly from one pair of opposite sides of the supporting body 121 are rotatably mounted on the two pivot arms 11321 of the mounting support 11.Correspondingly, the two lower holding arm 123 of the swinging support 12 extended downwardly from the other pair of opposite sides of the supporting body 121 are rotatably mounted on the two holder arms 212 of the motor holder 21, the rotation direction of the upper holding arms 122 of the swinging support 12 relative to the of the mounting support 11 and the rotation direction of the holder arms 212 of the motor holder 21 relative to the lower holding arm 123 of the swinging support 12 are perpendicular, that is, the 1001 formed at the connecting portion of the upper holding arms 122 of the swinging support 12 and the 113 of the mounting support 11 is orthogonal to the thrid rotation axis 1003 formed at the connecting portion of the holder arms 212 of the motor holder 21 and the lower holding arm 123 of the swinging support 12.

More specifically, the supporting body 121 of the swinging support 12, the two upper holding arms 122 and the two lower holding arm 123 are integrally formed. For example, the structural member for forming the supporting body 121 of the swinging support 12, the two upper holding arms 122 and the two lower holding arm 123 can be a stamped member, wherein the stamped member comprises a square middle part, a first protruding part extending outwardly from a pair of opposite sides of the middle part and a second protruding part extending outwardly from another pair of opposite sided of the middle part, wherein the supporting body 121 can be formed by the middle part in a manner of bending the two first protruding parts upwardly and bending the second protruding parts downwardly, wherein the two upper holding arms 122 are formed by the two first protruding parts and the lower holding arm 123 are formed by the two second protruding parts, so that the two upper holding arms 122 can be extended upwardly from one pair of opposite sides of the supporting body 121 and the two lower holding arm 123 can be extended downwardly from the other pair of opposite sides of the supporting body 121.

It is worth mentioning that the manner in which each of the holder arms 212 of the motor holder 21 is rotatably mounted on each of the lower holding arm 123 of the swinging support 12 is not limited in the cattle body massage device of the present invention. For example, in the embodiment of the cattle body massage device as shown in Fig. 1 to 3B, the 10 further comprises two second shafts 40,wherein each of the holder arms 212 of the motor holder 21 is respectively mounted on each of the lower holding arm 123 of the swinging support 12 through each of the second shafts 40, so that the two holder arms 212 of the motor holder 21 are respectively rotatably mounted on each of the lower holding arm 123 of the swinging support 12, so that the motor holder 21 is rotatably mounted on the swinging support 12. Optionally, in other embodiments of the cattle body massage device, each of the holder arms 212 of the motor holder 21 is directly rotatably mounted on each of the lower holding arm 123 of the swinging support 12, so that the motor holder 21 is rotatably mounted on the swinging support 12.

Furthermore, the holder body 211 of the motor holder 21 has en extending channel 2110 ,wherein the driving motor 22 mounted on the holder body 211 is kept between the motor holder 21 and the swinging support 12, and the 221 of the driving motor 22 is extended through the extending channel 2110 to an exterior of the motor holder 21, for mounting the brush roller 30, so that the cattle body massage device can conceal the driving motor 22 between the motor holder 21 and the swinging support 12 to avid the exposure of the driving motor 22 to ensure the reliability and stability of the cattle body massage device.

Continuing to refer to Fig. 1 to 3B, the brush roller 30 is detachably arranged at the output shaft 221 of the driving motor 22 of the driving unit 20, so as to allow the brush roller 30 to be replaced as needed. For example, when the brush roller 30 can be detached from the output shaft 221 of the motor holder 21 after the brush roller 30 is worn for long time use and a new brush roller 30 will be mounted on the output shaft 221 of the driving motor 22.

Specifically, the output shaft 221 of the driving motor 22 has a first penetrating hole 2210. The brush roller 30 has a mounting cavity 31 therein and two second penetrating holes 32, wherein the second penetrating holes 32 are symmetrical to each other and communicated with the mounting cavity 31, wherein the output shaft 221 of the driving motor 22 is extended to the mounting cavity 31 held at the brush roller 30 and the first penetrating hole 2210 of the driving motor output shaft 221 of the driving motor 22 is corresponded to and communicated with the second penetrating holes 32 of the brush roller 30. The cattle body massage device comprises a holding element 50, wherein the holding element 50 penetrates into and is retained in the first penetrating hole 2210 of the output shaft 221 of the driving motor 22, so that the brush roller 30 can be mounted on the output shaft 221 of the driving motor 22 by the holding element 50 and the brush roller 30 can be driven to rotate by the driving motor 22.

It can be understandable that when the brush roller 30 is detached from the output shaft 221 of the driving motor 22, firstly, the holding element 50 is firstly removed from the first penetrating hole 2210 of the output shaft 221 of the driving motor 22 and the second penetrating holes 32 of the brush roller 30, and secondly the output shaft 221 of the driving motor 22 is allowed to remove from the mounting cavity 31 of the brush roller 30. When the brush roller 30 is mounted to the output shaft 221 of the driving motor 22, firstly the output shaft 221 of the driving motor 22 is allowed to extend to and be retained in the mounting cavity 31 of the brush roller 30 and the first penetrating hole 2210 of the output shaft 221 of the driving motor 22 is corresponded to and communicated with the second penetrating holes 32 of the brush roller 30, and secondly the holding element 50 is allowed to penetrate into and be retained in the first penetrating hole 2210 of the output shaft 221 of the driving motor 22 and the second penetrating holes 32 of the brush roller 30, for mounting the brush roller 30 on the output shaft 221 of the driving motor 22.

Continuing to refer to the Fig. 1 to 3B, the driving unit 20 further comprises a controller 23, wherein the controller 23 is controllably coupled with the controller 23 to control the working state of the driving motor 22 by the controller 23, so as to control the working state of the cattle body massage device. For example, the controller 23 is configured to be able to control whether the driving motor 22 rotates. Preferably, the controller 23 is configured to be able to control the rotation direction of the driving motor 22. For example, the controller 23 is configured to be able to control the driving motor 22 to rotate forwardly, or the controller 23 is configured to be able to control the driving motor 22 to rotate reversely, or the controller 23 is configured to be able to control the driving motor 22 to rotate forwardly and reversely alternately. It can be understandable that the rotation state and direction of the brush roller 30 of the output shaft 221 of the driving motor 22 are consistent with the rotation state and direction of the driving motor 22.

Furthermore, the driving unit 20 comprises a monitor 24, wherein the monitor 24 is communicably coupled with the controller 23, wherein the monitor 24 is provided to be able to monitor the inclined angle of the driving motor 22, and the working state of the driving motor 22 can be controlled by the controller 23 according to the monitoring result of the controller 23. It is can be understandable that the inclination of the driving motor 22 is consistent with the inclination of the brush roller 30, so that the inclination of the brush roller 30 can be monitored by monitoring the driving motor 22.

In a preferred embodiment of the cattle body massage device in the present invention, when the monitor 24 monitors that the driving motor 22 is tilted to a preset angle, the controller 23 controls the driving motor 22 to rotate to drive the brush roller 30 to rotate. Accordingly, when the monitor 24 monitors that the inclination angle of the driving motor 22 is less than the preset angle, or when the monitor 24 monitors that the inclination angle of the driving motor 22 is less than the preset angle for a period of time, the controller 23 can control the driving motor 22 to stop, so that the brush roller 30 stops rotation and automatic massage to the cattle body can be realized.

Specifically, when the cattle body touches the brush roller 30 and drives the brush roller 30, the brush roller 30 can drive the motor holder 21 to rotate around the third rotation axis 1003 relative to the rotation of the swinging support 12 by the driving motor 22, and/or the brush roller 30 can drive the swinging support 12 to rotate around the first rotation axis 1001 relative to the mounting support 11 by the driving unit 20. At this time, the monitor 24 can monitor whether the inclination angle of the driving motor 22 reaches the preset angle, for example, the preset angle can be but not limited to 15°. If the inclination angle of the driving motor 22 monitored by the monitor 24 reaches the preset angle, the controller 23 can control the driving motor 22 to drive the brush roller 30 to rotate and the cattle body can be massaged in a manner of brushing the cattle body by the brush roller 30. It can be understandable that when the cattle body is away from the brush roller 30, under the gravity, the brush roller 30 drives the motor holder 21 to rotate around the second rotation axis 1002 relative to the swinging support 12 by the driving motor 22 and restore the state. At this time, in an embodiment of the cattle body massage device, the controller 23 can control the driving motor 22 to stop rotating when the inclination angle of the driving motor 22 is less than the preset angle. In another embodiment of the cattle body massage device of the present invention, the controller 23 can control the driving motor 22 to stop rotating when the inclination angle is less than the preset angle for a period of time(for example, 20s).

It is worth to mention that the type of the monitor 24 is not limited in the cattle body massage of the present invention, as long as it can be used to monitor the inclination angle of the driving motor 22. For example, in a preferred embodiment of the cattle body massage device of the present invention, the monitor 24 can be a gyroscope provided at the motor holder 21, or the brush roller 30, for monitoring the inclination angle of the driving motor 22. In another preferred embodiment of the cattle body massage of the present invention, the monitor 24 can be a camera that monitors the inclination angle of the driving motor 22 in a manner of capturing an image of the driving motor 22, the motor holder 21 or the brush roller 30.

In the specific embodiment of the cattle body massage device which the monitor 24 is embodied as a camera, the monitor 24 can automatically identify the age group of the cattle body by taking an image of the cattle body. For example, for a cowshed, the breed of the cattle body which is bred in the cowshed is determined, so that the age group of the cattle body can be judged and identified in a manner of obtaining the body configuration (height, body shape). In this way, the controller 23 can control the brush roller 30 to massage the cattle body at a suitable rotation speed and in a suitably manner according to the age group of the cattle body, so that the individual needs can be met. Specifically, the brush roller 30 can control the brush roller 30 to rotate at a slow speed, a medium speed or a high speed to provide massage for the cattle body, or the brush roller 30 can control the brush roller 30 to massage the cattle body in a forward rotation, reverse rotation or alternately forward and reverse rotation manner according to the age group of the cattle body.

Furthermore, in a preferred embodiment of the cattle body massage device of the present invention, the monitor 24 and the controller 23 are both attached to a circuit board 25 to facilitate miniaturization of the cattle body massage device, make it convenient for the monitor 24 to be communicably connected to the controller 23 and make it convenient for supplying power through the circuit board 25 to the monitor 24 and the controller 23 in a follow-up. Preferably, the driving motor 22 is electrically connected with the circuit board 25.

Continuing to refer to Fig.1 to 3B, the cattle body massage device further comprises a controlling switch 60, wherein the driving motor 22 is electrically connected to the controlling switch 60, the controlling switch 60 is electrically connected to an external power source and the circuit board 25, so that the external power needs to be transmitted to the circuit board 25 through the controlling switch 60, and then electric energy is distributed to the driving motor 22 by the circuit board 25. In this way, when the cattle body massage device needs to be shut down for maintenance and cleaning, or when an emergency occurs, the controlling switch 60 can be powered off to ensure safety.

It is worth mentioning that although Figs. 1 to 3B show an embodiment of the cattle body massage device which has the first rotation axis 1001 and the third rotation axis 1003, that is, the upper holding arms 122 of the swinging support 12 of the cattle body massage device is rotatably mounted on the pivot arms 11321 of the mounting support 11 and the holder arms 212 of the motor holder 21 is rotatably mounted on the lower holding arm 123 of the swinging support 12, it is understandable that in a deformation of the embodiment of the cattle body massage device of the present invention, the upper holding arms 122 of the swinging support 12 can be rotatably mounted on the pivot arms 11321 of the mounting support 11 and the holder arms 212 of the motor holder 21 can be fixedly mounted on the lower holding arm 123 of the swinging support 12. In an alternative mode of the embodiment of the cattle body massage device of the present invention, the upper holding arms 122 of the swinging support 12 can be fixedly mounted on the pivot arms 11321 of the mounting support 11 and the holder arms 212 of the motor holder 21 can be rotatably mounted on the lower holding arm 123 of the swinging support 12.

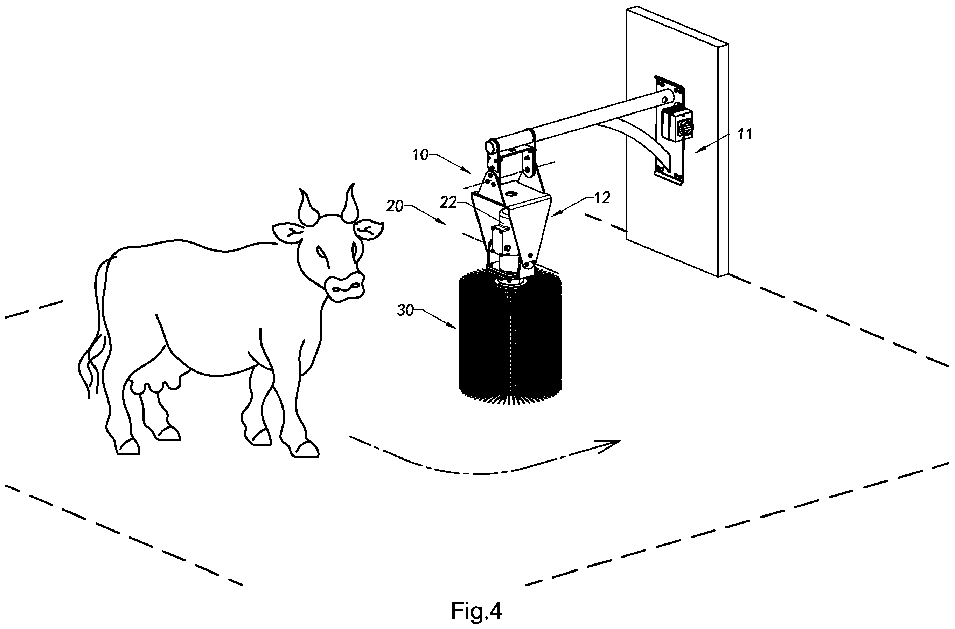

Figs.4 to 9 show a process for massaging the cattle body by using the cattle body massage device.

Referring to Fig.4, the cattle body massage device is held in the use environment (cowshed) in a manner that the 111 of the mounting support 11 is attached to the wall of the cowshed, wherein the brush roller 30 of the cattle body massage device is away from the wall of the cowshed to avoid the touch between the wall and the brush roller 30 in the subsequent massage process.

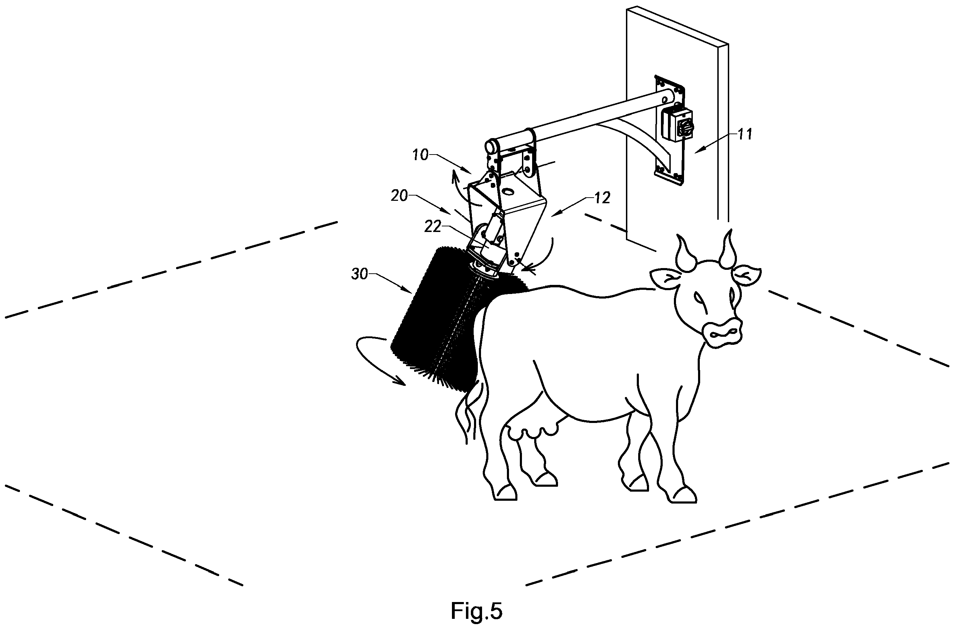

Referring to Fig.5, when the buttock of the cattle body pushes the brush roller 30, the brush roller 30 driven by the driving motor 22 is capable of driving the motor holder 21 to rotate around the third rotation axis 1003thrid rotation axis 1003 and relative to the swinging support 12 and driving the swinging support 12 to rotate around the first rotation axis 1001 and relative to the mounting support 11. At this time, when the monitor 24 sends a monitor result to the controller 23 after monitoring the inclination angle of the driving motor 22 reaches the preset angle, the controller 23 can control the driving motor 22 to rotate to drive the brush roller 30 to rotate around the second rotation axis 1002, so that the brush roller 30 provides massage for the cattle body in a manner of brushing the cattle body.

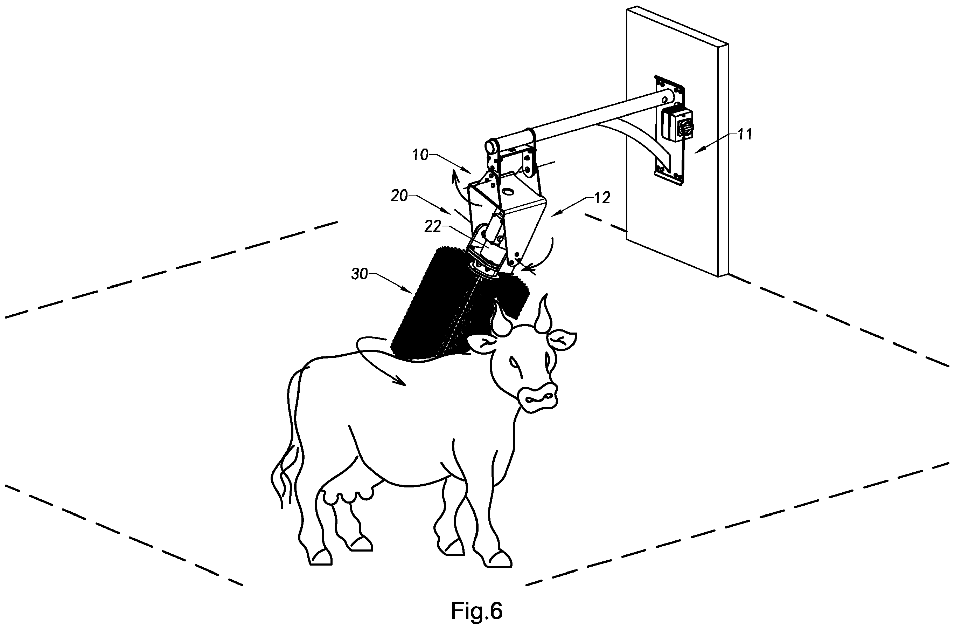

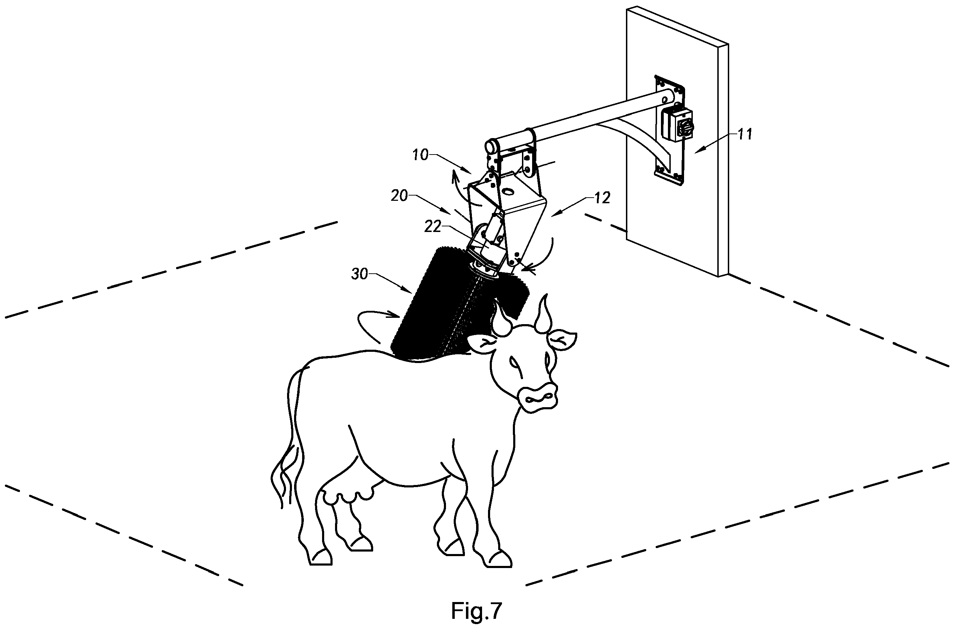

Referring to Figs. 6 and 7, the brush roller 30 can massage from the buttock to the back along the body of the cattle body, and the inclination angle of the brush roller 30 can be automatically varied with changes of the body portion of the cattle body, so as to automatically massage various possible portions of the cattle body. Understandably, in some special parts, the driving motor 22 can realize the forward and reverse rotation of the brush roller 30 in a manner of its own forward and reverse rotation, so as to provide a better massage effect for the cattle body.

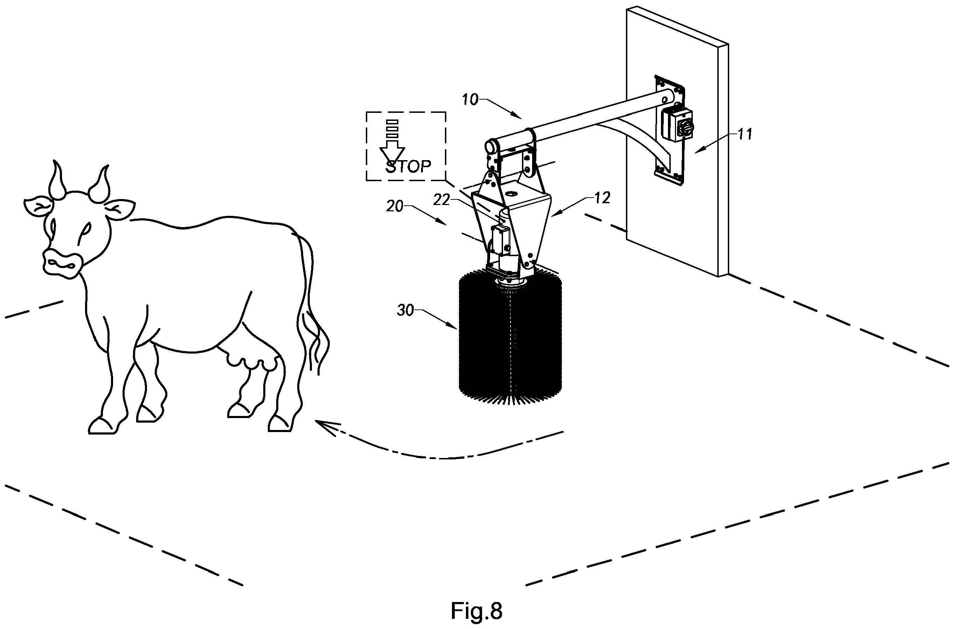

Referring to Fig.8, when the cattle body is away from the brush roller 30, under the gravity, the brush roller 30 can automatically restore to the vertical state. In an embodiment of the cattle body massage device, the driving motor 22 can be controlled to stop rotating when the inclination angle of the brush roller 30 is less than the preset angle. In another embodiment of the cattle body massage device of the present invention, the driving motor 22 can be controlled to stop rotating when the inclination angle of the brush roller 30 is less than the preset angle for a period of time (for example, 20s), so that the brush roller 30 can be stopped to rotate when the driving motor 22 stops.

In accordance with another aspect of the invention, the present invention further provides a cattle body massage method, which comprises the steps of:
(a) mount the swinging support 12 at the lower side of the mounting support 11;
(b) mount the motor holder 21 of the driving unit 20 at the swinging support 12;
(c) drivably mount the brush roller 30 at the driving motor 22 of the driving unit 20 , wherein the driving motor 22 is mounted on the motor holder 21; and
(d) monitor whether an inclination angle of the driving motor 22 reaches a preset angle, wherein after the inclination angle of the driving motor 22 reaches the preset angle, the brush roller 30 is driven to rotate by the driving motor 22, so as to allow the brush roller 30 to massage the cattle body in a manner of brushing the cattle body.

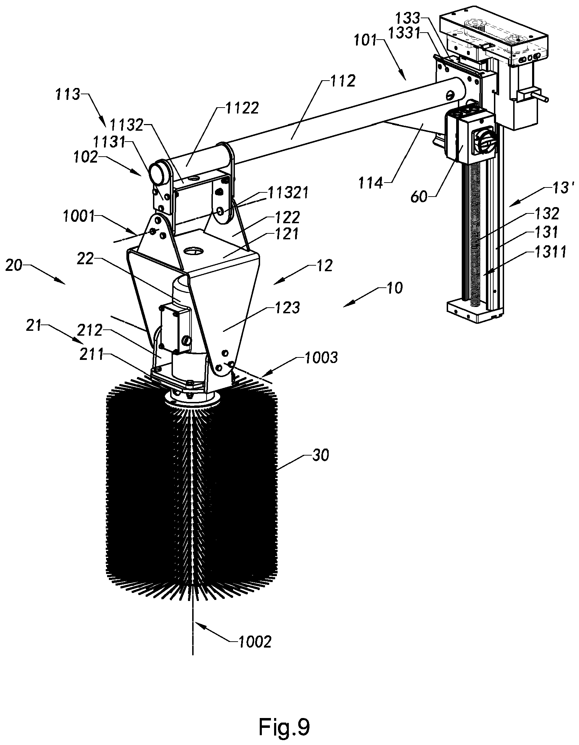

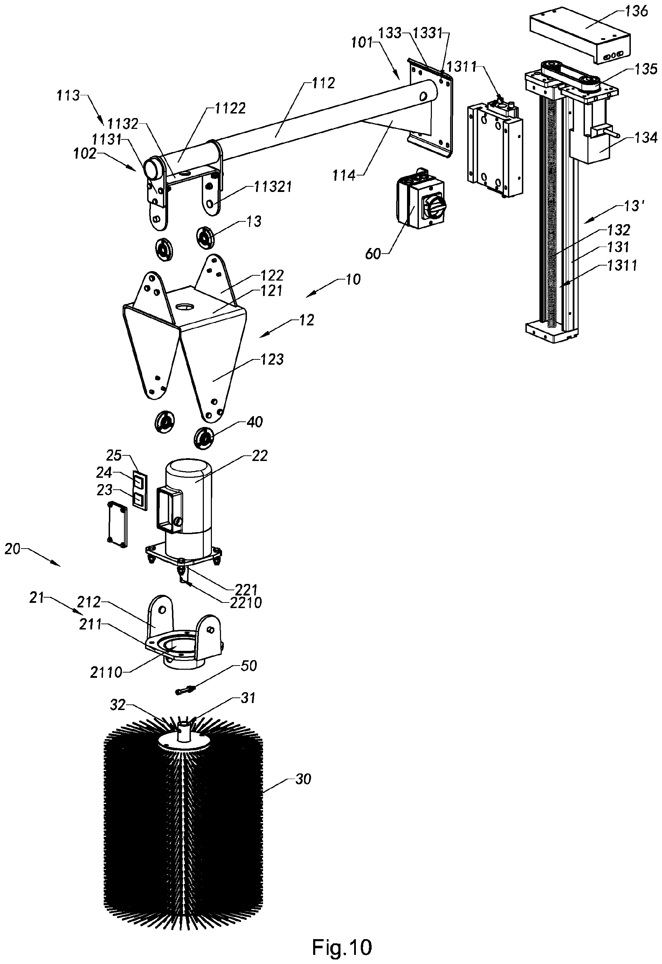

A deformation of the cattle body massage device of the present invention is shown in Figs. 9 and 10, the difference from the cattle body massage device in Figs. 1 to 8 is that the 10 further comprises an adjustable supporting frame 13' in the specific embodiment shown in Figs. 9 and 10, wherein the adjustable supporting frame 13' comprises a fixing frame 131, a driving screw 132 and a sliding seat 133, wherein the fixing frame 131 is configured to be mounted on the attachment such as a wall or a supporting column of a cowshed, and the fixing frame 131 provides a sliding track in a vertical direction, wherein the driving screw 132 is rotatably mounted on the fixing frame 131, wherein the sliding seat 133 is drivably mounted on the driving screw 132 and slidably held on a sliding track 1311 of the fixing frame 131. When the driving screw 132 is driven to rotate, the driving screw 132 can drive the sliding seat 133 to move along the sliding track 1311 of the fixing frame 131.

It is worth mentioning that the way that the sliding seat 133 is drivably mounted on the driving screw 132 is not limited in the cattle body massage device of the present invention. For example, in the specific embodiment of the cattle body massage device in the present invention as shown in Figs. 9 and 10, the sliding seat 133 has a screw hole 1331, wherein the driving screw 132 passes through and is retained in screw hole 1331 of the sliding seat 133, wherein when the driving screw 132 is driven to rotate, the driving screw 132 can drive the sliding seat 133 to move upwardly and downwardly along the sliding track 1311 of the fixing frame 131, under the restriction of the sliding track 1311 of the fixing frame 131.

Furthermore, the adjustable supporting frame 13' comprises an adjusting motor 134 and a power transmitting portion 135, wherein the power transmitting portion 135 is arranged to connect with the adjusting motor 134 and the driving screw 132, so as to allow the adjusting motor 134 to drive the driving screw 132 to rotate according the power transmitting portion 135. Preferably, the adjusting motor 134 is held on an end portion of the fixing frame 131. For example, the adjusting motor 134 is held on a high end portion of the fixing frame 131. Correspondingly, the power transmitting portion 135 is configured to connect with the adjusting motor 134 and the high end portion of the driving screw 132, so that the adjusting motor 134 can drive the hanging arm 112 to rotate at the high end of the driving screw 132 by the power transmitting portion 135.

Furthermore, the adjustable supporting frame 13' comprises a mounting box 136, wherein the high end portion of the fixing frame 131 and the adjusting motor 134 are both mounted on the mounting box 136, so that the adjusting motor 134 can be held at the high end portion of the fixing frame 131 by the mounting box 136, wherein the power transmitting portion 135 is held inside the mounting box 136.

The fixing end 101 of the mounting support 11 is mounted on the sliding seat 133 of the adjustable supporting frame 13', so that when the position of the sliding seat 133 relative to the adjustable supporting frame 13' is adjusted, the sliding seat 133 can drive the mounting support 11 to be adjusted synchronously, so as to adjust the height of the brush roller 30.

Person skilled in the art may conduct other forms of alternatives to the types and applications of the lighting apparatus according to the present invention based on actual needs.

Person skilled in the art shall understand that the above-mentioned embodiments of the present invention in the descriptions and figures are to give examples, but not to confine the present invention. Objectives of the present invention are completely and effectively implemented. Notions of the functions and structures of the present invention have been shown and described in the embodiments, whereas implementations of the present invention may have modifications or changes in any ways without going against the above notions.

## Claims

1. A cattle body massage device, comprising:
a brush roller;
a driving unit, wherein the driving unit comprises a motor holder and a driving motor provided at the motor holder, wherein the brush roller is drivably mounted on the output shaft of the driving motor; and
a supporting unit, wherein the supporting unit comprises a mounting support and a swinging support mounted at a connecting end of the swinging support, wherein the motor holder is mounted on the swinging support, so as to allow the brush roller to be suspendedly held at a lower side of the mounting support, wherein the driving unit is allowed to synchronously tilt driven by the brush roller when the brush roller is driven to tilt.

2. The cattle body massage device, as recited in claim 1, wherein the swinging support is rotatably mounted on the mounting support, so that the driving unit is allowed to synchronously tilt by the drive from the brush roller when the brush roller is driven to tilt.

3. The cattle body massage device, as recited in claim 1, wherein the motor holder is rotatably mounted on the swinging support, so that the driving unit is allowed to synchronously tilt by the drive from the brush roller when the brush roller is driven to tilt.

4. The cattle body massage device, as recited in claim 2, wherein the motor holder is rotatably mounted on the swinging support, so that the driving unit is allowed to synchronously tilt by the drive from the brush roller when the brush roller is driven to tilt.

5. The cattle body massage device, as recited in claim 4, wherein the rotation direction of the swinging support relative to the mounting support is different from the rotation direction of the motor holder relative to the swinging support.

6. The cattle body massage device, as recited in claim 5, wherein a rotation axis formed at the connecting portion of the swinging support and the mounting support is orthogonal to another rotation axis formed at the connecting portion of the motor holder and the swinging support.

7. The cattle body massage device, as recited in claim 2, wherein the mounting support has at least a pivot supporting arm and the swinging support comprises a supporting body and an upper holding arm extending upward from the supporting body, wherein the upper holding arm is rotatable mounted on the pivot supporting arm of the mounting support.

8. The cattle body massage device, as recited in claim 4, wherein the mounting support has two pivot arms which are symmetrically arranged, wherein the motor holder has at least two holder arms which are mutually symmetrical, wherein the swinging support comprises a supporting body, two upper holding arms and two lower holding arms, wherein the two upper holder arms extend upwardly from a pair of opposite sides of the supporting body in a mutually symmetrical manner and are respectively rotatably mounted on the two pivot arms, wherein the two lower holder arms extend downwardly from another pair of opposite sides of the supporting body in a mutually symmetrical manner and are respectively rotatably mounted on the two holder arms.

9. The cattle body massage device, as recited in claim 8, wherein the two upper holding arms of the swinging support are respectively rotatably mounted on the two pivot arms of the mounting support through a bearing and the two holder arms of the motor holder are rotatably mounted on the two lower holding arms of the motor holder through another bearing.

10. The cattle body massage device, as recited in claim 8, wherein the motor holder has an extending channel, wherein the driving motor is provided at the motor holder in a manner hidden between the motor holder and the swinging support, and an output shaft of the driving motor is extended through the extending channel to an exterior of the motor holder, wherein the brush roller is drivably mounted on the output shaft of the driving motor.

11. The cattle body massage device, as recited in any of claims 1-10, wherein the brush roller is detachably mounted on the output shaft of the driving motor.

12. The cattle body massage device, as recited in any of claims 1-10, wherein the driving unit comprises a controller and a monitor communicably coupled with the controller, wherein the driving motor is controllably coupled to the controller, wherein the monitor is used for monitoring the inclination state of the driving motor so as to allow the controller to control the working state of the driving motor according to the monitor result from the monitor.

13. The cattle body massage device, as recited in claim 7, wherein the two pivot arms are adjustably mounted on the upper holding arm.

14. The cattle body massage device, as recited in any of claims 1-10, wherein the supporting unit further comprises an adjustable supporting frame, wherein a fixing end of the mounting support is adjustably mounted at the adjustable supporting frame so that the height of the mounting support can be adjusted by the adjustable supporting frame.

15. The cattle body massage device, as recited in claim 14, wherein the adjusting support comprises a fixing frame, a driving screw and a sliding seat, wherein the fixing frame has a sliding track in a vertical direction, wherein the driving screw is rotatably mounted on the fixing frame, wherein the sliding seat is drivably mounted on the driving screw and slidably held on the sliding track of the fixing frame, wherein the mounting support comprises a mounting plate, a hanging arm and an extending arm, wherein the mounting plate is provided at a first end of the hanging arm and mounted on the sliding seat, wherein the extending arm is provide at a second end of the hanging arm, wherein the swinging support is mounted on the extending arm.

16. A cattle body massage method, comprising the steps of:
(a) mount a swinging support on a lower side of a connecting end of a mounting support;
(b) mount a motor holder of a driving unit on the swinging support;
(c) drivably mount a brush roller on a driving motor of the driving unit, wherein the driving motor is mounted on the motor holder; and
(d) monitor whether an inclination angle of the driving motor reaches a preset angle, wherein after the inclination angle reaches the preset angle, the brush roller is driven to rotate by the driving motor, so as to allow the brush roller to massage the cattle body in a manner of brushing the cattle body.

17. The cattle body massage device, as recited in claim 16, wherein in the step (a) the rotation of the swinging support relative to the mounting support is allowed.

18. The cattle body massage device, as recited in claim 16, wherein in the step (b) the rotation of the motor holder relative to the swinging support is allowed.

19. The cattle body massage device, as recited in claim 17, wherein in the step (b) the rotation of the motor holder relative to the swinging support is allowed.

20. The cattle body massage device, as recited in claim 19, wherein in the method the rotation direction of the swinging support relative to the mounting support is different from the rotation direction of the motor holder relative to the swinging support.

21. The cattle body massage device, as recited in any of claims 16-20, wherein in the step (d) the driving motor is controlled to drive the brush roller to scrub the cattle body in a forward rotation and reverse rotation alternately.

22. The cattle body massage device, as recited in any of claims 16-20, wherein in the step (d) the driving motor is monitored by a gyroscope.

23. The cattle body massage device, as recited in any of claims 16-20, wherein in the step (d) an age range of the cattle body is identified to control the working state of the driving motor based on the age range of the cattle body.
